# EUROPEAN PATENT APPLICATION

(11) **EP 4 744 762 A1**
(43) Date of publication of application: **20.05.2026**
(21) Application number: 25216604.6
(22) Date of filing: 18.11.2025
(51) Int. Cl.: B01D 71/60, C08F 8/00, C08G 73/02, H01B 1/12, H01M 8/1018

(54) **INSULATING COMPOSITION FOR RECHARGEABLE LITHIUM BATTERY, ELECTRODE AND RECHARGEABLE LITHIUM BATTERY MANUFACTURED USING SAME**

(30) Priority: 19.11.2024 KR 20240165459
(71) Applicant: SAMSUNG SDI CO., LTD., Yongin-si, Gyeonggi-do 17084 (KR)
(72) Inventor: Jung, Jiyoon, 17084 Yongin-si, Gyeonggi-do (KR)
(74) Representative: Meissner Bolte Partnerschaft mbB

(57) **Abstract**

Provided are an insulating composition for a rechargeable lithium battery, an electrode manufactured using the insulating composition, and a rechargeable lithium battery. The insulating composition for the rechargeable lithium battery includes a binder including a crosslinked polymer of a polymer and a monomer, inorganic particles, and a solvent. The polymer includes an amine group, and the monomer includes two or more halide groups in one molecule.

## Description

### BACKGROUND

### 1. Field

An insulating composition for a rechargeable lithium battery, an electrode manufactured using the insulating composition, and a rechargeable lithium battery are disclosed.

### 2. Description of the Related Art

A rechargeable lithium battery may be recharged, and may have three or more times as high an energy density per unit weight as a conventional lead storage battery, nickel-cadmium battery, nickel hydrogen battery, nickel zinc battery, or the like. The rechargeable lithium battery may be also charged at a high rate, and may thus be commercially manufactured for, e.g., a laptop, a cell phone, an electric tool, an electric bike, and the like. Improving additional energy density may be advantageous.

A rechargeable lithium battery is typically manufactured by injecting an electrolyte solution into an electrode assembly, which includes a positive electrode including a positive electrode active material capable of intercalating/deintercalating lithium ions, and a negative electrode including a negative electrode active material capable of intercalating/deintercalating lithium ions.

In general, a width of the negative electrode is wider than the width of the positive electrode, and a separator is interposed between the positive electrode and the negative electrode. Herein, a burr formed at the edge of the positive electrode coated region may come into contact with the negative electrode, and accordingly, a short may occur between the positive electrode and the negative electrode, or an OCV (open-circuit voltage) drop may occur.

In order to this issue, a method of coating the positive electrode uncoated region using an insulating composition including inorganic particles is known. As binders that adhere the above-mentioned inorganic particles to the positive electrode uncoated region while also adhering different inorganic particles, polyvinylidene fluoride (PVdF) and a styrene-butadiene rubber (SBR) are known.

However, the PVdF binder typically loses its adhesive strength as the PVdF binder absorbs the electrolyte solution inside the rechargeable lithium battery and swells after being coated on the positive electrode uncoated region, and the viscosity of the SBR binder abruptly drops during the coating process, although the SBR binder has good adhesive strength after coating.

### SUMMARY

The present invention concerns an insulating composition for a rechargeable lithium battery, which maintains desired or improved adhesive strength within a rechargeable lithium battery after coating, even without using an SBR binder.

The present invention is directed to an insulating composition for a rechargeable lithium battery, the insulating composition including a binder including a crosslinked polymer of a polymer and a monomer, inorganic particles, and a solvent. The polymer includes an amine group, and the monomer includes two or more halide groups in one molecule.

The present invention is also directed to an electrode for a rechargeable lithium battery, the electrode being manufactured using an insulating composition according to the invention.

The present invention is further directed to a rechargeable lithium battery, wherein at least one of the positive electrode and the negative electrode is an electrode according to the invention.

The insulating composition for the rechargeable lithium battery according to the invention may maintain a desired or improved adhesive strength within a rechargeable lithium battery after coating, even without using an SBR binder.

Accordingly, an electrode and a rechargeable lithium battery manufactured using the insulating composition for the rechargeable lithium battery according to the invention may exhibit desired or improved cycle-life characteristics.

The present invention is further directed to an electronic device or an electric vehicle containing a rechargeable lithium battery according to the invention.

### BRIEF DESCRIPTION OF THE DRAWINGS

FIG. 1 is a schematic view of an insulating composition for a rechargeable lithium battery according to some example embodiments and an insulating layer formed by coating the insulating composition.
FIG. 2 is a schematic view illustrating an electrode for a rechargeable lithium battery according to some example embodiments.

FIGS. 3 to 6 are schematic views illustrating rechargeable lithium batteries according to some example embodiments.

### DETAILED DESCRIPTION

Hereinafter, example embodiments of the present invention are described in detail. However, these embodiments are examples, the present invention is not limited thereto, and the present invention is defined by the scope of claims.

As used herein, when a specific definition is not otherwise provided, It is understood that when an element such as a layer, film, region, or substrate is referred to as being "on" another element, the element can be directly on the other element, or intervening elements may also be present.

As used herein, when a specific definition is not otherwise provided, the singular may also include the plural. In addition, unless otherwise specified, "A or B" may mean "including A, including B, or including A and B."

As used herein, a "combination thereof" may indicate a mixture, a stack, a composite, a copolymer, an alloy, a blend, or a reaction product of constituents.

As used herein, when a specific definition is not otherwise provided, "substituted" refers to replacement of at least one hydrogen of a compound by a halogen atom (F, Cl, Br, or I), a hydroxy group, a C1 to C20 alkoxy group, a nitro group, a cyano group, an amine group, an imino group, an azido group, an amidino group, a hydrazino group, a hydrazono group, a carbonyl group, a carbamyl group, a thiol group, an ester group, an ether group, a carboxyl group or a salt thereof, a sulfonic acid group or a salt thereof, a phosphoric acid or a salt thereof, a C1 to C20 alkyl group, a C2 to C20 alkenyl group, a C2 to C20 alkynyl group, a C6 to C30 aryl group, a C3 to C20 cycloalkyl group, a C3 to C20 cycloalkenyl group, a C3 to C20 cycloalkynyl group, a C2 to C20 heterocycloalkyl group, a C2 to C20 heterocycloalkenyl group, a C2 to C20 heterocycloalkynyl group, or a combination thereof.

As used herein, when a specific definition is not otherwise provided, "heterocycloalkyl group," "heterocycloalkenyl group", "heterocycloalkynyl group," and "heterocycloalkylene group" refer to presence of at least one N, O, S, or P in a cyclic compound of cycloalkyl, cycloalkenyl, cycloalkynyl, and cycloalkylene.

In the chemical formula of the present specification, unless a specific definition is otherwise provided, hydrogen is bonded at the position when a chemical bond is not drawn where supposed to be given.

As used herein, when a definition is not otherwise provided, a particle diameter may be an average particle diameter. In addition, the particle diameter may refer to an average particle diameter (D50), which indicates the diameter of particles having a cumulative volume of 50 volume% in the particle size distribution. The average particle diameter (D50) may be measured by a method known to those skilled in the art, for example, by a particle size analyzer, or by a transmission electron microscope image, or a scanning electron microscope image. Alternatively, a dynamic light-scattering measurement device may be used to perform a data analysis, and the number of particles is counted for each particle size range. Accordingly, the average particle diameter (D50) value may be readily obtained through a calculation. Alternatively, the average particle diameter (D50) value can be measured using a laser diffraction method. When measuring by the laser diffraction method, for example, the particles to be measured are dispersed in a dispersion medium, and then introduced into a commercially available laser diffraction particle diameter measuring device (e.g., Microtrac MT 3000), and ultrasonic waves of about 28 kHz with an output of 60 W are irradiated to calculate an average particle diameter (D50) on the basis of 50% of the particle diameter distribution in the measuring device.

As used herein, the "average particle size" of the binder indicates a volume average particle size, and refers to a Z-average particle size measured using a dynamic light scattering analysis device.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

### Insulating Composition for Rechargeable Lithium Battery:

The invention is directed to an insulating composition for a rechargeable lithium battery including a binder including a crosslinked polymer of a polymer and a monomer; inorganic particles; and a solvent. The polymer includes an amine group, and the monomer includes two or more halide groups in one molecule.

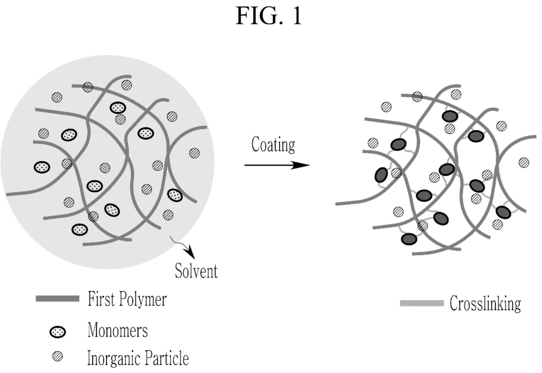

FIG. 1 is a schematic view of an insulating composition for a rechargeable lithium battery according to some example embodiments and an insulating layer formed by coating the insulating composition. The left-hand side drawing of FIG. 1 is a schematic view of an insulating composition for a rechargeable lithium battery, according to some example embodiments.

It is common technical knowledge that a bond is formed by an SN2 reaction between a molecule including an amine group and another molecule including a halide group.

A bond may also be formed by an SN2 reaction between an amine group in the polymer and a halide group in the monomer. Because the monomer includes two or more halide groups in one molecule, a crosslinked polymer having at least one crosslinked bond in the polymer may be formed.

The crosslinked polymer of the polymer and monomer thus formed has an intramolecular crosslinking structure, and therefore has a desired or improved adhesive strength and stability.

The SN2 reaction is a reaction that readily occurs by heating, and may form a crosslinked polymer during the solvent drying process after coating the insulating composition without a separate initiator or additional process.

Accordingly, the insulating composition for the rechargeable lithium battery according to the invention includes a crosslinked polymer of the polymer and the monomer as a binder, and thus may maintain a desired or improved adhesive strength, even within a rechargeable lithium battery after coating without using an SBR binder.

Hereinafter, an insulating composition for a rechargeable lithium battery according to the aforementioned example embodiments is described in detail.

### Monomer

The monomer may include, e.g., two to six, two to five, or two to four halide groups per molecule. The monomer may form crosslinking bonds with the polymer as many as the number of halide groups per molecule.

The monomer may be represented by Chemical Formula 1:

Chemical Formula 1: X¹-L¹-L²-L³-X²

The description of Chemical Formula 1 is as follows.

X¹ and X² may each independently be or include at least one of F, Cl, Br, or I.

For example, both X¹ and X² may be or include Br.

L¹ and L³ may each independently be or include a single bond or a substituted or unsubstituted alkylene having 1 to 30 carbon atoms.

For example, L¹ and L³ may each independently be or include a single bond, methane-diene, or ethane-diene.

L² may be or include a substituted or unsubstituted alkylene having 1 to 30 carbon atoms, a substituted or unsubstituted cycloalkylene having 3 to 30 carbon atoms, a substituted or unsubstituted heterocycloalkylene having 2 to 30 carbon atoms, a substituted or unsubstituted arylene having 6 to 30 carbon atoms, or a substituted or unsubstituted heteroarylene having 2 to 30 carbon atoms.

For example, L² may be or include at least one of ethane-diene, octane-diene, phenylene, or biphenylene.

Chemical Formula 1 may be represented by any one of Chemical Formulas 1-1 to 1-7:

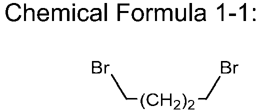

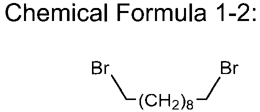

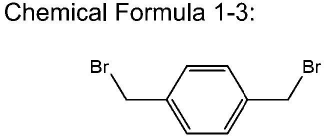

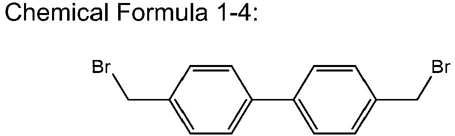

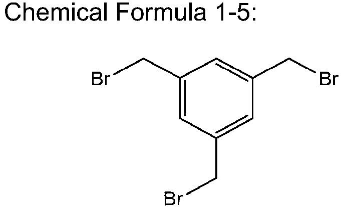

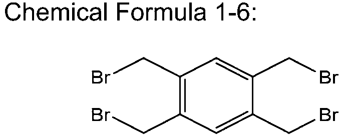

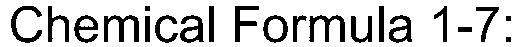

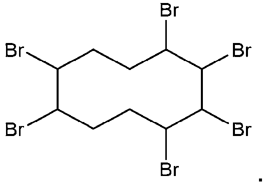

### Polymer

The polymer may be composed solely of a main chain including an amine group, or may be composed of or include a main chain not including an amine group and a pendant group including an amine group.

The pendant group including the amine group may be represented by Chemical Formula 2:

Chemical Formula 2: *-L³-y

The explanation regarding Chemical Formula 2 is as follows.

* is a portion linked to the main chain.

L³ may be or include a single bond, a substituted or unsubstituted cycloalkylene having 3 to 30 carbon atoms, a substituted or unsubstituted heterocycloalkylene having 2 to 30 carbon atoms, a substituted or unsubstituted arylene having 6 to 30 carbon atoms, or a substituted or unsubstituted heteroarylene having 2 to 30 carbon atoms.

For example, L³ may be or include a single bond or phenylene.

Y may be or include *-NH₂, pyridinyl, or 2-pyrrolidone.

Chemical Formula 2 may be represented by any one of Chemical Formulas 2-1 to 2-4:

Chemical Formula 2-1: *-NH₂

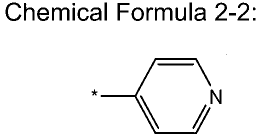

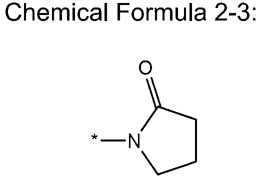

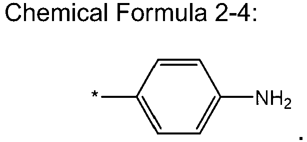

The main chain not including the amine group may be or include polyethylene; and the main chain including the amine group may be or include polyethyleneimine.

The polymer may include a repeating unit represented by any one of Chemical Formulas A1 to A5:

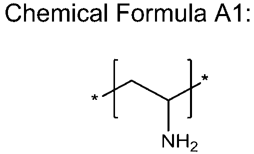

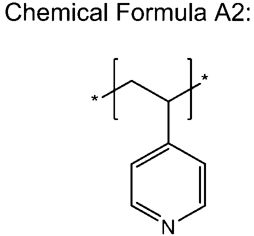

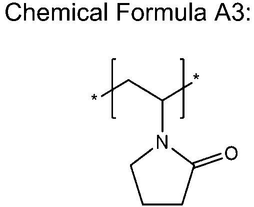

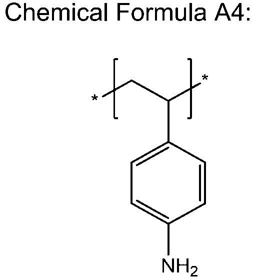

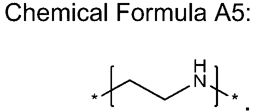

A weight average molecular weight of the polymer measured by gel permeation chromatography (GPC) may be in a range of about 20,000 g/mol to about 300,000 g/mol, or about 100,000 g/mol to about 200,000 g/mol.

### Second Binder

The crosslinked polymer of the polymer and monomer may be the first binder, and polyvinylidene fluoride may be the second binder.

As the second binder, polyvinylidene fluoride may be or include a particle-type binder, and may have a Z-average particle size in a range of about 100 nm to about 600 nm as measured using, e.g., a dynamic light scattering analysis device.

The binder may be composed solely of the first binder, or may be composed of or include a mixture of the first binder and the second binder. In any of the above cases, the SBR binder is not included.

When the binder is composed of or include a mixture of the first binder and the second binder, the weight ratio of the first binder and the second binder may be in a range of about 8:2 to about 2:8, or about 7:3 to about 3:7.

Within the above range, the effects of the first binder and the second binder may be harmonized to achieve an optimal effect.

### Inorganic Particles

The inorganic particles may be or include at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but are not limited thereto.

The average particle diameter (D50) of the inorganic particles may be in a range of about 0.01 µm to about 100 µm, but is not limited thereto.

### Solvent

The solvent may be or include at least one of methylpyrrolidone, dimethylformamide, and a combination thereof, but is not limited thereto.

### Mixture of Constituent Component

Based on the total amount of 100 wt% of the composition for the insulating layer, the binder may be included in an amount in a range of about 1 wt% to about 70 wt%; the inorganic particles may be included in an amount in a range of about 1 wt% to about 99 wt%; and the solvent may be included as a balance amount.

A weight ratio of the binder and the inorganic particles may be in a range of about 1:99 to about 99:1, about 5:95 to about 95:5, or about 10:90 to about 90:10.

When the above ranges are satisfied, the adhesive strength by the binder and the insulating strength by the inorganic particles may be harmonized, and the inorganic particles may be dispersed in the solvent.

### Physical Properties of Composition

The desired or improved physical properties exhibited by the composition for the insulating layer are as follows.

The insulating composition may have a viscosity in a range of about 500 mPa·s to about 2500 mPa·s, for example, about 1000 mPa·s to about 2000 mPa·s, at a shear rate of about 10 s⁻¹ at a temperature of about 25 °C.

The insulating composition may have a Thixotropy Index (T.I) value, which is a value obtained by dividing a viscosity at a shear rate of 1 s⁻¹ at 25 °C by a viscosity at a shear rate of 10 s⁻¹ and then taking the logarithm, that is less than or equal to about 0.5, for example, less than or equal to about 0.2.

### Electrode:

The electrode according to the invention includes an electrode active material layer; an electrode current collector including a coated region where the electrode active material layer is disposed, and an uncoated region where the electrode active material layer is not disposed; and an insulating layer configured to coat at least a portion of the uncoated region.

The insulating layer includes a binder including a crosslinked polymer of a polymer and a monomer; and inorganic particles, wherein the polymer includes an amine group, and the monomer includes two or more halide groups in one molecule.

FIG. 1 is a schematic view of an insulating composition for a rechargeable lithium battery according to the aforementioned example embodiments and an insulating layer formed by coating the insulating composition.

When at least a portion of the uncoated region is coated using the insulating composition for the rechargeable lithium battery according to the aforementioned example embodiments, the solvent is removed, and an insulating layer including the binder and the inorganic particles may be formed.

Accordingly, with respect to the electrode for a rechargeable lithium battery according to the aforementioned example embodiments, the same description may be applied, except for the 'solvent' in the aforementioned embodiments.

Hereinafter, an electrode for a rechargeable lithium battery according to the aforementioned example embodiments is described in detail, excluding any description overlapping with the aforementioned descriptions.

### Structure of Insulating Layer

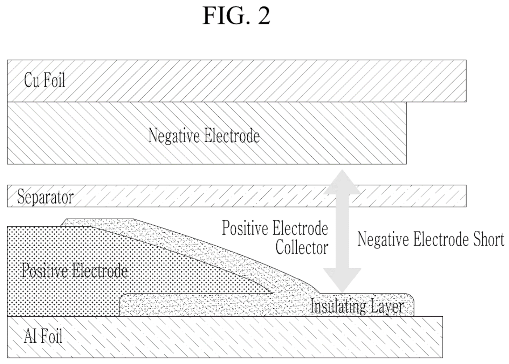

FIG. 2 is a schematic view illustrating an electrode for a rechargeable lithium battery according to the aforementioned example embodiments.

The insulating layer may cover a burr formed at the edge of the electrode active material layer and a portion of the uncoated region, as illustrated in FIG. 2.

Additionally, the insulating layer may also be present between the burr and the current collector.

By forming an insulating layer with this structure, it is possible to effectively hinder or prevent burrs formed at the edge of the positive electrode (cathode) coated region from coming into contact with the negative electrode (anode).

### Thickness of Insulating Layer

The thickness of the insulating layer may be larger than the thickness of the burr formed at the edge of the positive electrode coated region.

For example, the thickness of the insulating layer may be in a range of about 5 µm to about 100 µm. Within this range, the burr formed at the edge of the positive electrode coated region may be effectively hindered or prevented from contacting the negative electrode.

### Electrode Including Insulating Layer

The electrode for a rechargeable lithium battery according to the aforementioned example embodiments may be a positive electrode.

### Physical Properties of Electrode including Insulating Layer

The desired or improved physical properties exhibited by the insulating layer are as follows.

The crosslinking density, expressed as a weight ratio of the crosslinked polymer based on 100 wt% of a total weight of the insulating layer, may be greater than or equal to about 10%, for example, greater than or equal to about 20%.

Based on a total area 100 area% of the insulating layer, an area from which the insulating layer is detached after 24 hours of immersing the electrode in the electrolyte solution may be less than or equal to about 10 area%, for example, about 0 area%.

Based on a total length 100 length% of the insulating layer, after immersing the electrode in the electrolyte solution and at room temperature for about 24 hours, a change in length of the insulating layer may be less than or equal to about 5 length%, for example, about 0 length%.

The aforementioned electrolyte solution may be or include a mixture of 1.5 M lithium salt (LiPF₆) in a carbonate solvent in which ethylene carbonate (EC): ethyl methyl carbonate (EMC): dimethyl carbonate (DMC) are mixed in a volume ratio of about 20:40:40.

### Rechargeable Lithium Battery:

The rechargeable lithium battery according to the invention includes a positive electrode; a negative electrode; a separator between the positive electrode and the negative electrode; and an electrolyte solution, wherein at least one of the positive electrode and the negative electrode is or includes the electrode according to the invention.

Accordingly, an electrode and a rechargeable lithium battery manufactured using the insulating composition for the rechargeable lithium battery according to the invention may exhibit desired or improved cycle-life characteristics.

Hereinafter, a rechargeable lithium battery of some example embodiments is described in detail, excluding duplicate descriptions.

### Battery Cycle-life Characteristics

The rechargeable lithium battery may have cycle-life characteristics, expressed as a ratio of the discharge capacity at a 500th cycle divided by the discharge capacity at a 1st cycle after performing 500 charge/discharge cycles at 25 °C at a rate of 0.5 C in a voltage range of 2.0 to 4.0 V, that are greater than or equal to about 60%, greater than or equal to about 80%, or greater than or equal to about 90%.

### Positive Electrode Active Material

The positive electrode active material may be or include a compound (lithiated intercalation compound) capable of intercalating and deintercalating lithium. For example, one or more types of composite oxides of lithium and a metal such as or including cobalt, manganese, nickel, and combinations thereof may be used.

The composite oxide may be or include a lithium transition metal composite oxide, and examples thereof may include a lithium nickel-based oxide, a lithium cobalt-based oxide, a lithium manganese-based oxide, a lithium iron phosphate-based compound, a cobalt-free lithium nickel-manganese-based oxide, or a combination thereof.

As an example, a compound represented by any of the following chemical formulas may be used. LiₐA_{1-b}X_{b}O_{2-c}Dₑ (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}O_{α} (0.90≤a≤1.8, 0≤b≤0.5, 0≤c≤0.5, 0<α<2); LiₐNi_{b}CocL¹_{d}GeO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂GbO₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above chemical formulas, A is or includes at least one of Ni, Co, Mn, or a combination thereof; X is or includes at least one of Al, Ni, Co, Mn, Cr, Fe, Mg, Sr, V, a rare earth element, or a combination thereof; D is or includes at least one of O, F, S, P, or a combination thereof; G is or includes at least one of Al, Cr, Mn, Fe, Mg, La, Ce, Sr, V, or a combination thereof; and L¹ is or includes at least one of Mn, Al, or a combination thereof.

The positive electrode active material may be or include, for example, at least one of a lithium nickel-based oxide represented by Chemical Formula 11, a lithium cobalt-based oxide represented by Chemical Formula 12, a lithium iron phosphate-based compound represented by Chemical Formula 13, a cobalt-free lithium nickel-manganese-based oxide represented by Chemical Formula 14, or a combination thereof.

Chemical Formula 11: Liₐ₁Niₓ₁M¹_{y1}M²_{z1}O_{2-b1}X_{b1}

In Chemical Formula 11, 0.9≤a1≤1.8, 0.3≤x1≤1, 0≤y1≤0.7, 0≤z1≤0.7, 0.9≤x1+y1+z1≤1.1, and 0≤b1≤0.1, M¹ and M² each independently are or include one or more of Al, B, Ba, Ca, Ce, Co, Cr, Cu, Fe, Mg, Mn, Mo, Nb, Si, Sn, Sr, Ti, V, W, and Zr, and X is or includes one or more of F, P, and S.

In Chemical Formula 11, 0.6≤x1≤1, 0≤y1≤0.4, and 0≤z1≤0.4, or 0.8≤x1≤1, 0≤y1≤0.2, and 0≤z1≤0.2.

Chemical Formula 12: Liₐ₂Coₓ₂M³_{y2}O_{2-b2}X_{b2}

In Chemical Formula 12, 0.9≤a2≤1.8, 0.7≤x2≤1, 0≤y2≤0.3, 0.9≤x2+y2≤1.1, and 0≤b2≤0.1, M³ is or includes one or more of Al, B, Ba, Ca, Ce, Cr, Cu, Fe, Mg, Mn, Mo, Ni, Se, Si, Sn, Sr, Ti, V, W, Y, Zn, and Zr, and X is or includes one or more of F, P, and S.

Chemical Formula 13: Liₐ₃Feₓ₃M⁴_{y3}PO_{4-b3}X_{b3}

In Chemical Formula 13, 0.9≤a3≤1.8, 0.6≤x3≤1, 0≤y3≤0.4, and 0≤b3≤0.1, M⁴ is or includes one or more of Al, B, Ba, Ca, Ce, Co, Cr, Cu, Mg, Mn, Mo, Ni, Se, Si, Sn, Sr, Ti, V, W, Y, Zn, and Zr, and X is or includes one or more of F, P, and S.

Chemical Formula 14: Liₐ₄Niₓ₄Mn_{y4}M⁵_{z4}O_{2-b4}X_{b4}

In Chemical Formula 14, 0.9≤a4≤1.8, 0.8≤x4<1, 0<y4≤0.2, 0≤z4≤0.2, 0.9≤x4+y4+z4≤1.1, and 0≤b4≤0.1, M⁵ is or includes one or more of Al, B, Ba, Ca, Ce, Cr, Fe, Mg, Mo, Nb, Si, Sn, Sr, Ti, V, W, and Zr, and X is or includes one or more of F, P, and S.

For example, the positive electrode active material may be or include a high-nickel positive electrode active material in which the nickel content is greater than or equal to about 80 mol%, greater than or equal to about 85 mol%, greater than or equal to about 90 mol%, greater than or equal to about 91 %, or greater than or equal to about 94 mol% and less than or equal to about 99 mol%, based on 100 mol% of metal excluding lithium in the lithium transition metal composite oxide. The high-nickel positive electrode active material may exhibit high capacity, and may be applicable to high-capacity, high-density rechargeable lithium batteries.

### Positive Electrode

The positive electrode for a rechargeable lithium battery may include a current collector, and a positive electrode active material layer on the current collector. The positive electrode may be manufactured using the insulating composition for the rechargeable lithium battery according to the aforementioned example embodiments.

The positive electrode active material layer may include a positive electrode active material, and may further include a binder and/or a conductive material.

For example, the positive electrode may further include an additive that may constitute a sacrificial positive electrode.

An amount of the positive electrode active material may be in a range of about 90 wt% to about 99.5 wt% based on 100 wt% of the positive electrode active material layer, and the amount of each of the binder and the conductive material may be in a range of about 0.5 wt% to about 5 wt% based on 100 wt% of the positive electrode active material layer.

The binder is configured to improve binding properties of positive electrode active material particles with one another, and with a current collector. Examples of binders may include at least one of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but are not limited thereto.

The conductive material is included to provide electrode conductivity, and any electrically conductive material may be used as a conductive material unless the electrically conductive material causes a chemical change. Examples of the conductive material may include a carbon-based material such as at least one of natural graphite, artificial graphite, carbon black, acetylene black, Ketjen black, a carbon fiber, a carbon nanofiber, a carbon nanotube, and the like; a metal-based material of a metal powder or a metal fiber including at least one of copper, nickel, aluminum, silver, and the like; a conductive polymer such as a polyphenylene derivative; or a mixture thereof.

### Negative Electrode Active Material

The negative electrode active material may include at least one of a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, SiOₓ (0 < x ≤ 2), a Si-Q alloy (wherein Q is an element such as or including at least one of an alkali metal, an alkaline-earth metal, a Group 13 element, a Group 14 element (excluding Si), a Group 15 element, a Group 16 element, a transition metal, a rare earth element, and a combination thereof), or a combination thereof. The Sn-based negative electrode active material may be or include at least one of Sn, SnO₂, a Sn-based alloy, or a combination thereof.

The silicon-carbon composite may be or include a composite of silicon and amorphous carbon. According to some example embodiments, the silicon-carbon composite may be in the form of silicon particles, and amorphous carbon coated on the surface of the silicon particles. For example, the silicon-carbon composite may include a secondary particle (core) in which silicon primary particles are assembled, and an amorphous carbon coating layer (shell) on the surface of the secondary particle. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles, and an amorphous carbon coating layer on the surface of the core.

The Si-based negative electrode active material or Sn-based negative electrode active material may be mixed with the carbon-based negative electrode active material.

### Negative Electrode

A negative electrode for a rechargeable lithium battery includes a current collector and a negative electrode active material layer on the current collector. The negative electrode active material layer includes a negative electrode active material, and may further include a binder and/or a conductive material.

For example, the negative electrode active material layer may include about 90 wt% to about 99 wt% of the negative electrode active material, about 0.5 wt% to about 5 wt% of the binder, and about 0.5 wt% to about 5 wt% of the conductive material.

The binder is configured to adhere the negative electrode active material particles to each other, and to adhere the negative electrode active material to the current collector. The binder may be or include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include at least one of a styrene-butadiene rubber, a (meth)acrylated styrene-butadiene rubber, a (meth)acrylonitrile-butadiene rubber, a (meth)acrylic rubber, butyl rubber, a fluororubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is included as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed. The alkali metal may be or include at least one of Na, K, or Li.

The dry binder is a polymer material capable of being fiberized, and may be or include, for example, at least one of polytetrafluoroethylene, polyvinylidene fluoride, polyvinylidene fluoride-hexafluoropropylene copolymer, polyethylene oxide, or a combination thereof.

The conductive material is included to provide electrode conductivity, and any electrically conductive material may be included as a conductive material unless the electrically conductive material causes a chemical change. Examples of the conductive material include a carbon-based material such as at least one of natural graphite, artificial graphite, carbon black, acetylene black, Ketjen black, a carbon fiber, a carbon nanofiber, a carbon nanotube, and the like; a metal-based material of a metal powder or a metal fiber including at least one of copper, nickel, aluminum silver, and the like; a conductive polymer such as a polyphenylene derivative; or a mixture thereof.

The negative electrode current collector may include at least one of a copper foil, a nickel foil, a stainless-steel foil, a titanium foil, a nickel foam, a copper foam, a polymer substrate coated with a conductive metal, and a combination thereof.

### Electrolyte Solution

An electrolyte solution for a rechargeable lithium battery includes a non-aqueous organic solvent and a lithium salt.

The non-aqueous organic solvent is configured as a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like. The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include at least one of ethanol, isopropyl alcohol, and the like. The aprotic solvent may include at least one of nitriles such as R-CN (wherein R is a C2 to C20 linear, branched, or cyclic hydrocarbon group, a double bond, an aromatic ring, or an ether group, and the like); amides such as dimethylformamide; dioxolanes such as 1,3-dioxolane, 1,4-dioxolane, and the like; sulfolanes, and the like.

The non-aqueous organic solvent may be included alone or in a mixture of two or more types of solvents.

In addition, when using a carbonate-based solvent, a cyclic carbonate and a chain carbonate may be mixed, and the cyclic carbonate and the chain carbonate may be mixed in a volume ratio in a range of about 1:1 to about 1:9.

The electrolyte may further include at least one of vinylethyl carbonate, vinylene carbonate, fluoroethylene carbonate, difluoro ethylenecarbonate, chloroethylene carbonate, dichloroethylene carbonate, bromoethylene carbonate, dibromoethylene carbonate, nitroethylene carbonate, cyanoethylene carbonate, or a combination thereof as an additive.

The lithium salt dissolved in the organic solvent is configured to supply lithium ions in a battery, to enable a basic operation of a rechargeable lithium battery, and to improve transportation of the lithium ions between positive and negative electrodes. Examples of the lithium salt may include at least one of LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFOB), and lithium bis(oxalato) borate (LiBOB).

### Separator

Depending on the type of rechargeable lithium battery, a separator may be present between the positive and negative electrodes. The separator may include at least one of polyethylene, polypropylene, polyvinylidene fluoride, or a multilayer film of two or more layers thereof, and a mixed multilayer film such as a polyethylene/polypropylene two-layer separator, a polyethylene/polypropylene/polyethylene three-layer separator, a polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be or include a polymer film formed of or including any one polymer such as at least one of polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles such as or including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer, or a coating layer including an organic material and a coating layer including an inorganic material may be stacked together.

### Rechargeable Lithium Battery

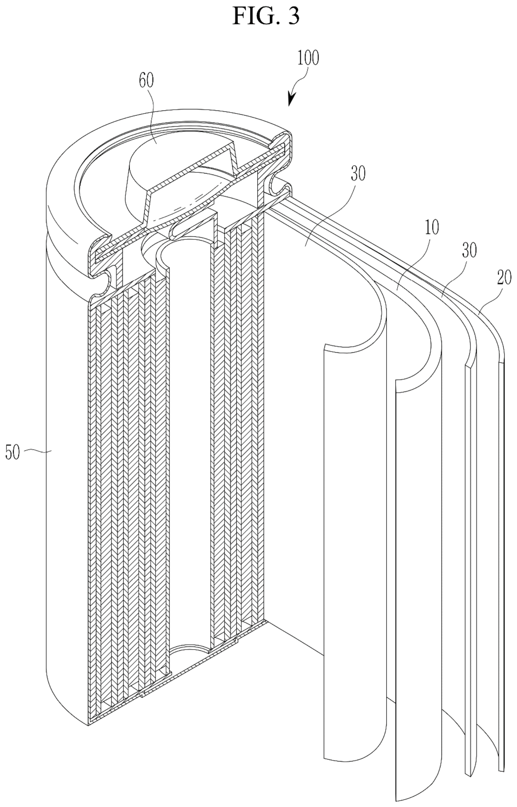

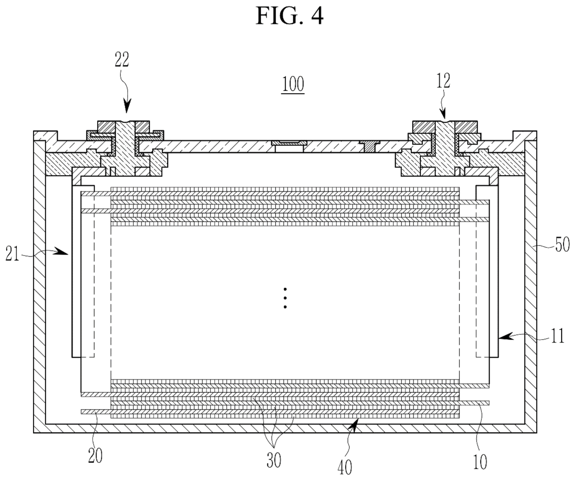

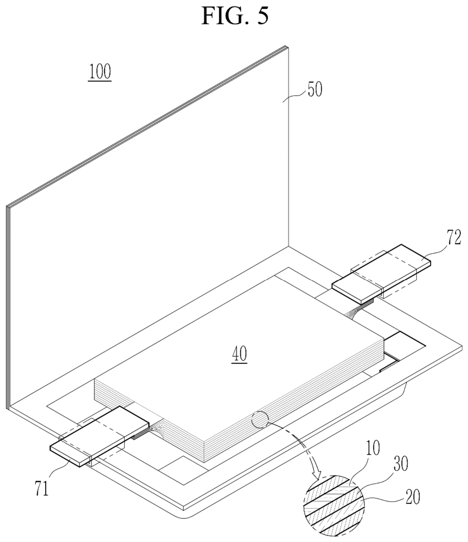

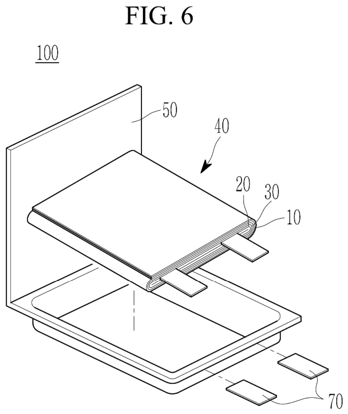

The rechargeable lithium battery may be classified into cylindrical, prismatic, pouch, or coin-type batteries, and the like depending on its shape. FIGS. 3 to 6 are schematic views illustrating the rechargeable lithium battery according to some example embodiments, where FIG. 3 is a cylindrical battery, FIG. 4 is a prismatic battery, and FIGS. 5 and 6 are a pouch-shaped battery. Referring to FIGS. 3 to 6, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50, as illustrated in FIG. 3. Additionally, in FIG. 4, the rechargeable lithium battery 100 may include a positive electrode lead tab 11, a positive electrode terminal 12 connected to the positive electrode lead tab 11, a negative electrode lead tab 21, and a negative electrode terminal 22 connected to the negative electrode lead tab 21. As shown in FIGS. 5 and 6, the rechargeable lithium battery 100 includes an electrode tab 70 illustrated in FIG. 6, or a positive electrode tab 71 and a negative electrode tab 72 illustrated in FIG. 5, the electrode tabs 70/71/72 forming an electrical path for inducing the current formed in the electrode assembly 40 to the outside of the rechargeable lithium battery 100.

The rechargeable lithium battery according to some example embodiments may be applicable to, e.g., automobiles, mobile phones, and/or various types of electrical devices, but the present disclosure is not limited thereto.

Examples and comparative examples of the present disclosure are described below. However, the following examples are only examples of the present disclosure, and the present disclosure is not limited to the following examples.

### Example 1

### (1) Preparation of First Binder and Insulating Composition Including the Same

A first binder was prepared by forming a crosslinking structure through an SN2 reaction of a polyvinyl pyrrolidone polymer including an amine group and a monomer (Chemical Formula 1-1) including alkyl halide at 130 °C.

The polyvinyl pyrrolidone polymer had a weight average molecular weight of 200,000 g/mol, which was measured in a GPC method.

2 wt% of the first binder, 8 wt% of polyvinylidene fluoride having a Z-average particle diameter of 100 nm, which was measured by using an optical scattering analyzer, and a weight average molecular weight of 1,000,000 g/mol, which was measured in the GPC method, a second binder, 20 wt% of boehmite having an average particle diameter (D50) of 2.5 µm as inorganic particles, and 70 wt% of NMP as a solvent were mixed to prepare an insulating composition.

Herein, the first binder: the second binder had a weight ratio of 2:8. In addition, the weight ratio of a total binder of the first binder and the second binder : the inorganic particles was equal to 1:2.

### (2) Manufacturing of Positive Electrode

As a positive electrode current collector, an aluminum foil with a thickness of 10 µm was used.

A positive electrode slurry was prepared by mixing LiNi_{0.91}Co_{0.05}Al_{0.04}O₂ as a positive electrode active material, polyvinylidene fluoride (PVDF) as a binder, and carbon as a conductive agent in a weight ratio of 92:4:4, and then dispersing the mixture in N-methyl-2-pyrrolidone. This slurry was coated on a 10 µm-thick aluminum foil to form a positive electrode active material layer.

A portion of the positive electrode current collector where the positive electrode active material layer was disposed was called a 'positive electrode coated region,' and the other portion of the positive electrode current collector where the positive electrode active material layer was not disposed was called a 'positive electrode uncoated region.'

Subsequently, the insulating composition was coated to be about 10 um thick to simultaneously or contemporaneously cover a burr formed at the edge of the positive electrode active material layer and a portion of the uncoated region on the positive electrode current collector, and then dried at 130 °C in an oven, manufacturing a positive electrode.

### (3) Manufacturing of Negative Electrode

A negative electrode active material slurry was manufactured by mixing artificial graphite and silicon particles in a weight ratio of 93.5:6.5 as a negative electrode active material, and then mixing the negative electrode active material: a styrene-butadiene rubber binder: carboxylmethyl cellulose in a weight ratio of 97:1:2, and dispersing the mixture in distilled water.

The negative electrode active material slurry was coated on a 10 µm-thick Cu foil, and then dried at 100 °C and pressed to form a negative electrode active material layer.

### (4) Preparation of Electrolyte Solution

An electrolyte solution was prepared by mixing 1.5 M lithium salt (LiPF₆) with a carbonate solvent including ethylene carbonate (EC): ethyl methyl carbonate (EMC): dimethyl carbonate (DMC) in a volume ratio of 20:40:40.

### (5) Manufacturing of Rechargeable Lithium Battery Cell

The manufactured positive and negative electrodes were assembled to obtain an electrode assembly, and then inserted into a prismatic case, and the electrolyte solution was injected thereinto to manufacture a rechargeable lithium battery cell.

### Example 2

An insulating composition, a positive electrode, and a rechargeable lithium battery cell were manufactured in the same manner as in Example 1, with a difference that the monomer was changed to a compound represented by Chemical Formula 1-2 when preparing the insulating composition.

### Example 3

An insulating composition, a positive electrode, and a rechargeable lithium battery cell were manufactured in the same manner as in Example 1, with a difference that the monomer was changed to a compound represented by Chemical Formula 1-3 when preparing the insulating composition.

### Example 4

An insulating composition, a positive electrode, and a rechargeable lithium battery cell were manufactured in the same manner as in Example 1, with a difference that the monomer was changed to a compound represented by Chemical Formula 1-4 when preparing the insulating composition.

### Example 5

An insulating composition, a positive electrode, and a rechargeable lithium battery cell were manufactured in the same manner as in Example 1, with a difference that the monomer was changed to a compound represented by Chemical Formula 1-5 when preparing the insulating composition.

### Example 6

An insulating composition, a positive electrode, and a rechargeable lithium battery cell were manufactured in the same manner as in Example 1, with a difference that the monomer was changed to a compound represented by Chemical Formula 1-6 when preparing the insulating composition.

### Example 7

An insulating composition, a positive electrode, and a rechargeable lithium battery cell were manufactured in the same manner as in Example 1, with a difference that the monomer was changed to a compound represented by Chemical Formula 1-7 when preparing the insulating composition.

### Comparative Example 1

An insulating composition, a positive electrode, and a rechargeable lithium battery cell were manufactured in the same manner as in Example 1, with a difference that the monomer was changed to 1-bromopropane when preparing the insulating composition.

### Comparative Example 2

An insulating composition, a positive electrode, and a rechargeable lithium battery cell were manufactured in the same manner as in Example 1, with a difference that the second binder alone was used as a binder when preparing the insulating composition.

### Evaluation Example 1: Evaluation of Insulating Composition

The insulating compositions of Examples 1 to 7 and Comparative Examples 1 and 2 were evaluated in the following method, and the results are shown in Tables 1 and 2 below.

Viscosity: measured at a shear rate of 10 s⁻¹ at 25 °C by attaching a cone plate PP25 to a viscosity measuring apparatus (Anton Paar, MCR302E), and then evaluated according to the following criteria:
⊚: viscosity in a range of 1000 to 2000 mPa · s at a shear rate of 10 s⁻¹;
○: viscosity of less than or equal to 500 mPa · s in the range of 1000 to 2000 mPa · s at a shear rate of 10 s⁻¹;
△: viscosity deviated by greater than or equal to 500 mPa · s in the range of 1000 to 2000 mPa · s at a shear rate of 10 s⁻¹; and
X: viscosity was immeasurable.
   (1) T.I: Thixotropy Index (T.I) was evaluated according to the following criteria by dividing viscosity at a shear rate of 1 s⁻¹ at 25 °C by viscosity at a shear rate of 10 s⁻¹, and then calculating a logarithmic value thereof:
      ⊚ : T.I of less than or equal to 0.2;
      ∘ : T.I of 0.2 to 0.5;
      △ : T.I of greater than or equal to 0.5; and
      X: viscosity was immeasurable.

### Evaluation Example 2: Evaluation of Positive Electrode

The positive electrodes of Examples 1 to 7 and Comparative Examples 1 and 2 were evaluated in the following method, and the results are shown in Tables 1 and 2 below.
(1) Crosslinking Density: calculated as a weight ratio of a first binder, which was a crosslinked polymer, based on 100 wt% of a total weight of the first binder, a second binder, and inorganic particles in an insulating layer formed of an insulating composition. For reference, the insulating layer formed of the insulating composition included the first binder, the second binder, and the inorganic particles except for a solvent:
   ⊚ : crosslinking density greater than or equal to 20%;
   o : crosslinking density of 10 to 20%;
   △ : crosslinking density of less than or equal to 10%; and
   X : crosslinking density of 0%.
(2) Adhesive Strength (Peel): Each of the insulating compositions was coated to be 10 µm thick on an aluminum substrate, dried at 130 °C in an oven, and immersed in an electrolyte solution, and after 24 hours, whether or not an insulating layer was detached or not from the aluminum substrate was determined. The results were evaluated according to the following criteria. Herein, the electrolyte solution used above was the same as the electrolyte solution used in Example 1:
   ⊚ : detachment of 0 area%;
   ○: detachment possibility of 0 to10 area%;
   △ : detachment possibility of 10 to 20 area%; and
   X : detachment possibility of greater than or equal to 20 area%.
(3) Swelling Rate: Each of the insulating compositions was coated to be 10 µm thick on an aluminum substrate, dried at 130 °C in an oven, and immersed in an electrolyte solution, and after 24 hours at room temperature, each insulating layer was measured with respect to a length change. The results were evaluated according to the following criteria. Herein, the electrolyte solution used above was the same as the electrolyte solution used in Example 1:
   ⊚ : swelling rate of 0 length%;
   o : swelling rate of 0 to 5 length%;
   △ : swelling rate of 5 to 10 length%; and
   X : swelling rate of greater than or equal to 10 length%.
(4) Curl: Each of the insulating compositions was coated to be 10 µm thick on an aluminum substrate and dried at 130 °C in an oven to check a height at which the coated substrate bent. The results were evaluated according to the following criteria:
   ⊚ : less than or equal to 0.3 cm;
   o : 0.3 cm to 0.5 cm;
   △ : 0.5cm to 1cm; and
   X : greater than or equal to 1 cm.
(5) Detachment: Each of the insulating compositions was coated to be 10 µm thick on an aluminum substrate and dried at 130 °C in an oven, and then immersed in an electrolyte solution, and after 48 hours at room temperature, each insulating layer was measured with respect to a detachment area. The results were evaluated according to the following criteria. Herein, the electrolyte solution used above was the same as the electrolyte solution used in Example 1:
   ⊚ : detachment of 0 area%;
   o : detachment possibility of 0 to 10 area%;
   △ : detachment possibility of 10 to 20 area%; and
   X : detachment possibility of greater than or equal to 20 area%.

### Evaluation Example 3: Evaluation of Rechargeable Lithium Battery Cell

Each of the insulating compositions of Examples 1 to 7 and Comparative Examples 1 and 2 was evaluated in the following method, and the results are shown in Tables 1 and 2 below.

Cycle-life characteristics were evaluated by calculating a ratio of 500^{th} cycle discharge capacity to 1^{st} cycle discharge capacity after 500 cycles charging and discharging coin cells at 0.5 C within a voltage range of 2.0 to 4.0 V at 25 °C:
⊚ : cycle-life characteristics of greater than or equal to 90%;
o : cycle-life characteristics of 80 to 90%;
△ : cycle-life characteristics of 60 to 80%; and
X : cycle-life characteristics of less than or equal to 60%.

**Table 1:**

| | | Exam ple 1 | Exam ple 2 | Exam ple 3 | Exam ple 4 | Exam ple 5 | Exam ple 6 | Exam ple 7 |
|---|---|---|---|---|---|---|---|---|
| First binder | Number of halide groups in the monomer | 2 | 2 | 2 | 3 | 4 | 5 | 6 |
| | Crosslinking time | ⊚ | ⊚ | ⊚ | ⊚ | ⊚ | ⊚ | ⊚ |
| Binder composition | First binder (crosslinked polymer) | 2 | 2 | 2 | 2 | 2 | 2 | 2 |
| | Second binder (PVdF) | 8 | 8 | 8 | 8 | 8 | 8 | 8 |
| | SBR | - | - | - | - | - | - | - |
| Characteristics of composition | Viscosity | ⊚ | ⊚ | ⊚ | ⊚ | ⊚ | ○ | ○ |
| | T.I. | ⊚ | ⊚ | ⊚ | ⊚ | ⊚ | ○ | ○ |
| Characteristics of positive electrode | Crosslinking density | ○ | ○ | ○ | ○ | ⊚ | ⊚ | ○ |
| | Adhesive strength (Peel) | ○ | ○ | ○ | ○ | ⊚ | ⊚ | ○ |
| | Swelling rate | ○ | ○ | ○ | ○ | ⊚ | ⊚ | ○ |
| | Curl occurrence | X | X | X | X | X | Δ | X |
| | Detachment occurrence | Δ | Δ | Δ | X | X | X | Δ |
| Characteristics of Rechargeable lithium battery cell | Cycle-life characteristics | Δ | Δ | Δ | ○ | ⊚ | ⊚ | ⊚ |

**Table 2:**

| | | Comparative Example1 | Comparative Example 2 |
|---|---|---|---|
| First binder | Number of halide groups in a monomer | 1 | - |
| | Crosslinking density | ⊚ | - |
| Binder composition | First binder | 2 | - |
| | Second binder (PVdF) | 8 | 10 |
| | SBR | - | - |
| Characteristics of composition | Viscosity | ⊚ | ○ |
| | T.I. | ⊚ | ⊚ |
| Characteristics of positive electrode | Crosslinking density | X | X |
| | Adhesive strength (Peel) | X | X |
| | Swelling rate | X | X |
| | Curl occurrence | ⊚ | X |
| | Detachment occurrence | ⊚ | ⊚ |
| Characteristics of Rechargeable lithium battery cell | Cycle-life characteristics | X | X |

The insulating composition for a rechargeable lithium battery, which was represented by Examples 1 to 7, included the crosslinked polymer of a polymer and a monomer, and thus maintained desired or improved adhesive strength without an SBR binder within the rechargeable lithium battery after the coating.

Accordingly, an electrode and a rechargeable lithium battery manufactured using the insulating composition for the rechargeable lithium battery according to the aforementioned example embodiments may exhibit desired or improved cycle-life characteristics.

While this disclosure has been described in connection with what is presently considered to be practical example embodiments, it is to be understood that the disclosure is not limited to the disclosed embodiments. On the contrary, the disclosure is intended to cover various modifications and equivalent arrangements included within the spirit and scope of the appended claims.

### Description of Symbols:

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. An insulating composition for a rechargeable lithium battery, the insulating composition comprising:
a binder including a crosslinked polymer of a polymer and a monomer;
inorganic particles; and
a solvent,
wherein the polymer includes an amine group, and
the monomer includes two or more halide groups in one molecule.

2. The insulating composition as claimed in claim 1, wherein the monomer includes two to six halide groups in one molecule.

3. The insulating composition as claimed in claim 1 or 2, wherein the monomer is represented by Chemical Formula 1;
Chemical Formula 1: X¹-L¹-L²-L³-X²
wherein, in Chemical Formula 1,
X¹ and X² each independently comprise F, Cl, Br, or I,
L¹ and L³ each independently comprise a single bond or a substituted or unsubstituted alkylene having 1 to 30 carbon atoms, and
L² comprises a substituted or unsubstituted alkylene having 1 to 30 carbon atoms, a substituted or unsubstituted cycloalkylene having 3 to 30 carbon atoms, a substituted or unsubstituted heterocycloalkylene having 2 to 30 carbon atoms, a substituted or unsubstituted arylene having 6 to 30 carbon atoms, or a substituted or unsubstituted heteroarylene having 2 to 30 carbon atoms,
preferably wherein Chemical Formula 1 is represented by any one of Chemical Formula 1-1 to 1-7:

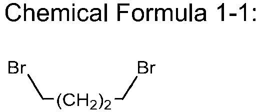

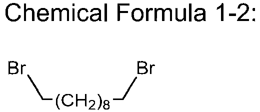

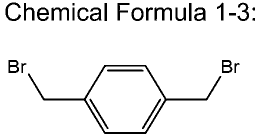

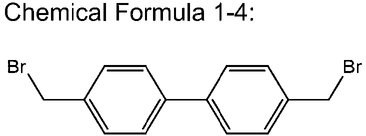

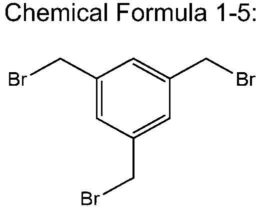

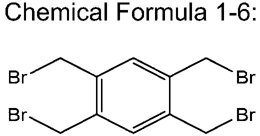

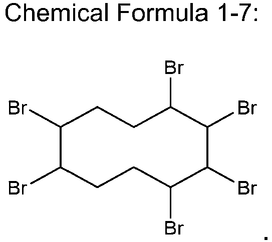

4. The insulating composition as claimed in any of claims 1-3, wherein the polymer is one of:
composed solely of a main chain including an amine group, optionally wherein the main chain including the amine group comprises polyethyleneimine, and
comprising a main chain not including an amine group and a pendant group including an amine group, optionally wherein the main chain not including the amine group comprises polyethylene.

5. The insulating composition as claimed in any of claims 1-4, wherein the polymer comprises a main chain not including an amine group and a pendant group including an amine group, wherein the pendant group including the amine group is represented by Chemical Formula 2; Chemical Formula 2:
*-L⁴-Y
wherein, in Chemical Formula 2,
* is a portion linked to the main chain;
L⁴ comprises a single bond, a substituted or unsubstituted cycloalkylene having 3 to 30 carbon atoms, a substituted or unsubstituted heterocycloalkylene having 2 to 30 carbon atoms, a substituted or unsubstituted arylene having 6 to 30 carbon atoms, or a substituted or unsubstituted heteroarylene having 2 to 30 carbon atoms; and
Y comprises *-NH₂, pyridinyl, or 2-pyrrolidone,
preferably wherein Chemical Formula 2 is represented by any one of Chemical Formulas 2-1 to 2-4:
Chemical Formula 2-1: *-NH₂

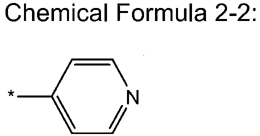

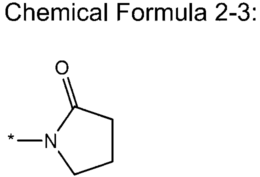

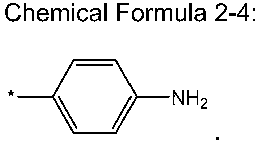

6. The insulating composition as claimed in any of claims 1-5, wherein the polymer comprises a repeating unit represented by any one of Chemical Formulas A1 to A5:

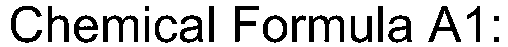

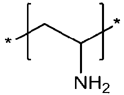

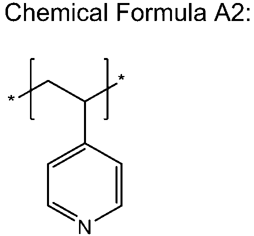

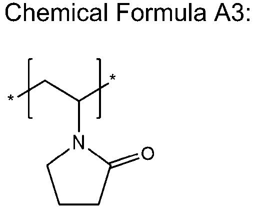

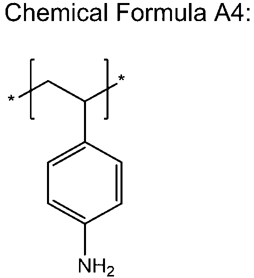

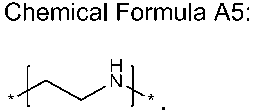

7. The insulating composition as claimed in any of claims 1-6, wherein:
the crosslinked polymer of the polymer and monomer is a first binder,
polyvinylidene fluoride is a second binder, and
the binder is one of:
composed solely of the first binder, and
comprising a mixture of the first binder and the second binder.

8. The insulating composition as claimed in any of claims 1-7, wherein the insulating composition has a viscosity in a range of 500 mPa·s to 2500 mPa·s at a shear rate of 10 s⁻¹ at a temperature of 25 °C; and/or wherein the insulating composition has a Thixotropy Index (T.I) value that is less than or equal to 0.5.

9. An electrode for a rechargeable lithium battery, the electrode comprising:
an electrode active material layer;
an electrode current collector including a coated region where the electrode active material layer is disposed, and an uncoated region where the electrode active material layer is not disposed; and
an insulating layer configured to coat at least a portion of the uncoated region,
wherein the insulating layer includes:
a binder including a crosslinked polymer of a polymer and a monomer; and
inorganic particles,
wherein the polymer includes an amine group, and
the monomer includes two to six halide groups in one molecule.

10. The electrode as claimed in claim 9, wherein the insulating layer covers a burr formed at an edge of the electrode active material layer and a portion of the uncoated region.

11. The electrode as claimed in claim 9 or 10, wherein:
a crosslinking density is greater than or equal to 10%.

12. The electrode as claimed in any of claims 9-11, wherein:
based on a total area 100 area% of the insulating layer, an area from which the insulating layer is detached after 24 hours of immersion at room temperature of the electrode in electrolyte solution is less than or equal to 10 area%, optionally wherein the electrolyte solution is a mixture of 1.5 M LiPF₆ in a carbonate solvent including ethylene carbonate : ethyl methyl carbonate : dimethyl carbonate in a volume ratio of 20:40:40; and/or
based on a total length 100 length% of the insulating layer, after immersing the electrode in electrolyte solution and at room temperature for 24 hours, a change in length of the insulating layer is less than or equal to 5 length%, optionally wherein the electrolyte solution is a mixture of 1.5 M LiPF₆ in a carbonate solvent including ethylene carbonate : ethyl methyl carbonate : dimethyl carbonate in a volume ratio of 20:40:40.

13. The electrode as claimed in any of claims 9-12, wherein a thickness of the insulating layer is in a range of 5 µm to 100 µm.

14. A rechargeable lithium battery, comprising:
a positive electrode;
a negative electrode;
a separator between the positive electrode and the negative electrode; and
an electrolyte solution,
wherein at least one of the positive electrode and the negative electrode comprises the electrode as claimed in any of claims 9-13,
optionally wherein the rechargeable lithium battery has cycle-life characteristics expressed as a ratio of the discharge capacity at a 500th cycle divided by the discharge capacity at a 1st cycle, after performing 500 charge/discharge cycles at 25 °C at a rate of 0.5 C in a voltage range of 2.0 to 4.0 V, that is greater than or equal to 60%.

15. An electronic device or an electric vehicle containing a rechargeable lithium battery as claimed in the previous claim.
